# EUROPEAN PATENT APPLICATION

(11) **EP 4 848 748 A1**
(43) Date of publication of application: **02.12.2026**
(21) Application number: 26180475.1
(22) Date of filing: 22.05.2026
(51) Int. Cl.: H04N 25/773, G06T 5/40, G06T 5/60, G06T 5/90, H04N 25/78, G06N 3/084

(54) **USE OF A LEARNING MODEL TO PREDICT FINAL IMAGE FRAME DATA FROM IMAGE DATA READ OUT NON-DESTCRUCTIVELY DURING EXPOSURE**

(30) Priority: 26.05.2025 JP 2025087409
(71) Applicant: Canon Kabushiki Kaisha, Tokyo 146-8501 (JP)
(72) Inventor: KOBAYASHI, Shigeyuki, Tokyo, 146-8501 (JP)
(74) Representative: TBK

(57) **Abstract**

An apparatus (100) that includes a photoelectric converter (102) where a plurality of pixels (301) are arranged, and a processor (103) configured to process image data read out from the converter (102), is provided. The converter (102) is configured to enable non-destructive readout of image data during an exposure period for obtaining one frame image, and the processor (103) includes a model (104) configured to estimate, from input data based on first image data read out during the exposure period, frame image data read out from the converter (102) after the exposure period is completed, and causes the model (104) to perform learning based on a comparison result between estimated image data, which is estimated from the input data by the model (104), and the frame image data.

## Description

### TECHNICAL FIELD

The aspect of the embodiments relates to an apparatus, a system, a moving body, equipment, a learning method, a method, and a program.

### BACKGROUND

There is known a photoelectric conversion apparatus using an avalanche photodiode (APD) that causes avalanche multiplication capable of detecting faint light of a single photon level. US-2017-0186798 discloses a photoelectric conversion apparatus in which a sensor chip, where a plurality of pixels each using an APD are arranged, and a circuit chip, where circuits for performing signal processes are formed, are stacked.

### SUMMARY

There is demand for improvement in the quality of an image obtained by photoelectric conversion apparatuses including pixels using APDs.

The disclosure in its first aspect provides an apparatus as specified in claim 1. Optional features are specified in claim 2 to 12.

The disclosure in its second aspect provides a system as specified in claim 13.

The disclosure in its third aspect provides a moving body as specified in claim 14.

The disclosure in its fourth aspect provides equipment as specified in claim 15.

The disclosure in its fifth aspect provides a learning method as specified in claim 16.

The disclosure in its sixth aspect provides a method as specified in claim 17.

The disclosure in its seventh aspect provides a program as specified in claim 18.

Features of the disclosure will become apparent from the following description of embodiments with reference to the attached drawings. The following description of embodiments is described by way of example.

### BRIEF DESCRIPTION OF THE DRAWINGS

Fig. 1 is a functional block diagram showing an example of the configuration of a photoelectric conversion apparatus according to the disclosure;
Fig. 2 is a functional block diagram showing an example of the configuration of an image processor of the photoelectric conversion apparatus shown in Fig. 1;
Fig. 3 is a hardware configuration diagram showing an example of the configuration of the photoelectric conversion apparatus shown in Fig. 1;
Fig. 4 is a view showing an example of the configuration of a photoelectric conversion device of the photoelectric conversion apparatus shown in Fig. 1;
Fig. 5 is a view showing an example of the configuration of a sensor chip of the photoelectric conversion device shown in Fig. 5;
Fig. 6 is a view showing an example of the configuration of a circuit chip of the photoelectric conversion device shown in Fig. 5;
Fig. 7 is a view showing an example of the configuration of a pixel circuit of the photoelectric conversion device shown in Fig. 5;
Figs. 8A and 8B are views showing an example of driving of the pixel circuit of the photoelectric conversion device shown in Fig. 5;
Fig. 9 is a view showing an example of driving of the pixel circuit of the photoelectric conversion device shown in Fig. 5;
Fig. 10 is a view for explaining the effect of the first embodiment;
Fig. 11 is a view for explaining the effect of the first embodiment;
Fig. 12 is a flowchart for explaining an operation according to the first embodiment;
Fig. 13 is a view for explaining the effect of the second embodiment;
Fig. 14 is a view for explaining the effect of the third embodiment;
Fig. 15 is a view for explaining the effect of the fourth embodiment;
Fig. 16 is a view for explaining the effect of the fifth embodiment;
Fig. 17 is a view for explaining the effect of the sixth embodiment;
Figs. 18A and 18B are views showing an example of a photoelectric conversion system using the photoelectric conversion apparatus according to the embodiment;
Fig. 19 is a view showing an example of a photoelectric conversion system using the photoelectric conversion apparatus according to the embodiment;
Figs. 20A and 20B are views each showing an example of a photoelectric conversion system using the photoelectric conversion apparatus according to the embodiment; and
Fig. 21 is a view showing an example of the configuration of equipment incorporating the photoelectric conversion apparatus according to the embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

Embodiments according to the disclosure will now be described in detail with reference to the accompanying drawings. Note that, in the following description, terms (for example, "upper", "lower", "right", "left" and other terms including these terms) representing specific directions or positions are used, as necessary. These terms are used for easy understanding of the embodiments with reference to the accompanying drawings, and the meanings of the terms do not limit the technical scope of the disclosure.

In this specification, a planar view is viewing from a direction perpendicular to the light incident surface of a semiconductor layer. A sectional view is viewing a plane in the direction perpendicular to the light incident surface of the semiconductor layer. Note that if the light incident surface of the semiconductor layer is rough microscopically, the planar view is defined with reference to the light incident surface of the semiconductor layer when viewed macroscopically.

In the following description, the anode of the avalanche photodiode (APD) is set at a fixed potential and a signal is extracted from the cathode side. Therefore, a semiconductor region of the first conductivity type where a charge of the same polarity as that of a signal charge serves as a majority carrier is an n-type semiconductor region, and a semiconductor region of the second conductivity type where a charge of a polarity different from that of a signal charge serves as a majority carrier is a p-type semiconductor region. The disclosure is established even in a case where the cathode of the APD is set at a fixed potential and a signal is extracted from the anode side. In this case, a semiconductor region of the first conductivity type where a charge of the same polarity as that of a signal charge serves as a majority carrier is a p-type semiconductor region, and a semiconductor region of the second conductivity type where a charge of a polarity different from that of a signal charge serves as a majority carrier is an n-type semiconductor region. A case where one node of the APD is set at a fixed potential will be explained, but the potentials of two nodes may vary.

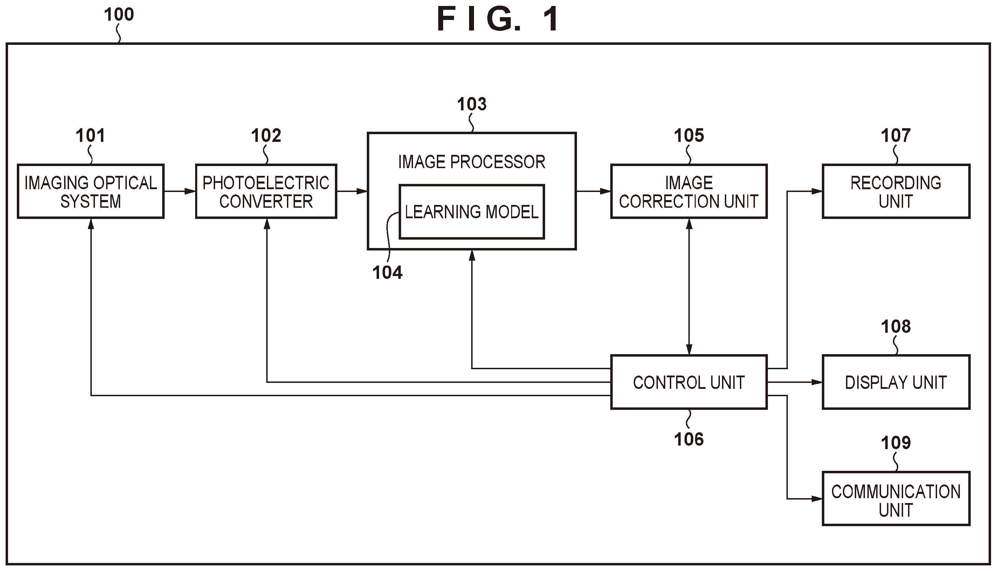

With reference to Figs. 1 to 17, a photoelectric conversion apparatus according to each embodiment of the disclosure will be described. Fig. 1 is a functional block diagram showing an example of the configuration of a photoelectric conversion apparatus 100 according to the first embodiment of the disclosure. The photoelectric conversion apparatus 100 includes an imaging optical system 101, a photoelectric converter 102, an image processor 103, an image correction unit 105, a control unit 106, a recording unit 107, a display unit 108, and a communication unit 109.

The imaging optical system 101 forms an object image on the photoelectric converter 102. The photoelectric converter 102 photoelectrically converts the received object image to obtain image data. The photoelectric converter 102 is configured to enable readout of image data during an exposure period for obtaining one frame image. Each of image data during the exposure period (to be sometimes referred to as prefetched image data hereinafter) and image data after the exposure period is completed (to be sometimes referred to as frame image data hereinafter) is read out from the photoelectric converter 102 and transmitted to the image processor 103 that processes image data read out from the photoelectric converter 102.

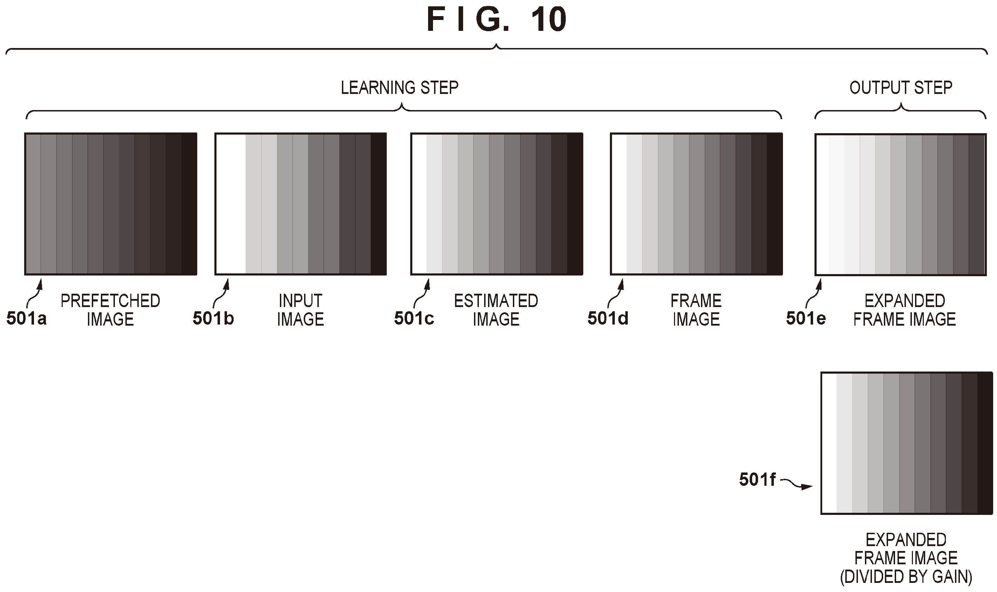

The image processor 103 includes a learning model 104 (to be sometimes simply referred to as a model hereinafter) that estimates, from input data based on prefetched image data read out during the exposure period, frame image data read out from the photoelectric converter 102 after the exposure period is completed. In a learning step of causing the model 104 to perform learning, the model 104 generates estimated image data which is estimated from the input data based on the prefetched image data. The image processor 103 compares the generated estimated image data with the frame image data transmitted from the photoelectric converter 102, and obtains an evaluation value (error). Based on the evaluation value, which is the comparison result, the image processor 103 causes the model 104 to perform learning. The image processor 103 causes the model 104 to perform learning until the difference between the estimated image data and the frame image data becomes equal to or smaller than a threshold. Since the prefetched image data has a smaller image signal (pixel value) than the frame image data, estimating the frame image data from the input data based on the prefetched image data by the model 104 corresponds to tone interpolation, that is, bit depth expansion. The principle for this will be described later with reference to Fig. 10.

When the learning of the model 104 progresses and the evaluation value becomes equal to or smaller than the threshold, the learning is completed, and the image processor 103 transitions to an output step for outputting image data. In the output step, the image processor 103 inputs the frame image data to the learned model 104, and performs an image process of the frame image data. With this, the bit depth of the frame image data is expanded. As a result, the tone not expressed in the frame image data is interpolated (expanded), and expanded frame image data having a higher bit depth than the frame image data is generated.

The expanded frame image data is transmitted to the image correction unit 105. The image correction unit 105 performs correction processes such as, for example, black level correction, gamma curve adjustment, noise reduction, digital gain adjustment, mosaic processing, and data compression, and generates eventual image data (final image data). The final image data is transmitted to the control unit 106. The control unit 106 controls operations of respective components of the photoelectric conversion apparatus 100. The final image data can be transmitted to the recording unit 107, the display unit 108, and the communication unit 109 via the control unit 106. The control unit 106 may control the imaging optical system 101 and the photoelectric converter 102 in accordance with the luminance value of the final image data, the luminance value histogram, or the like. The control unit 106 also controls switching between the learning step and output step of the image processor 103. The recording unit 107 stores the final image data in a recording medium, and the display unit 108 displays an image based on the final image data with respect to the user. The communication unit 109 transmits the final image data to the outside of the photoelectric conversion apparatus 100 via a wired or wireless connection interface, and receives various kinds of signals from the outside. Here, the photoelectric conversion apparatus 100 according to this embodiment may not have all the functions shown in Fig. 1. The photoelectric conversion apparatus 100 according to this embodiment only needs to include, for example, the photoelectric converter 102, the image processor 103, and control circuits for controlling these. For example, when the photoelectric converter 102, the image processor 103, and control circuits for controlling these constitute a photoelectric conversion apparatus, it can be considered that reference numeral 100 indicates a photoelectric conversion system that includes image processing circuits such as the image correction unit 105 for generating an image using signals output from the photoelectric conversion apparatus.

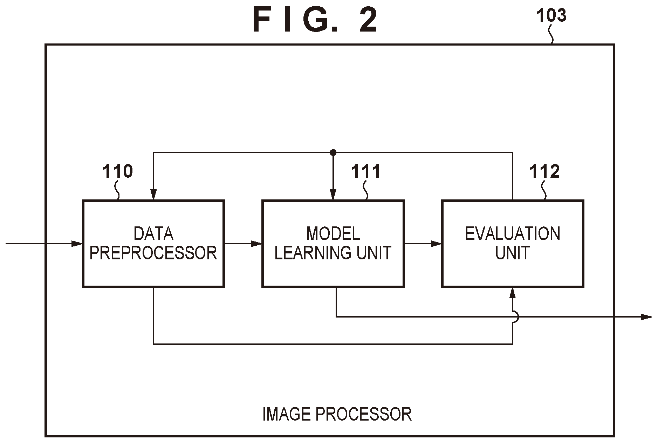

Fig. 2 is a functional block diagram showing an example of the internal configuration of the image processor 103 shown in Fig. 1. The image processor 103 includes a data preprocessor 110, a model learning unit 111, and an evaluation unit 112. In the learning step, the data preprocessor 110 generates, from the prefetched image data, the input data to input to the model 104. The data preprocessor 110 shapes the prefetched image data by performing, for example, gain correction according to the length of the exposure period in one frame and the length of a period from the start of the exposure period to the readout timing of the prefetched image data. As will be described later in detail, the data preprocessor 110 may also remove some tone data from the prefetched image data, remove some pixel data included in the prefetched image data, or the like. In the learning step, the data preprocessor 110 transmits, to the model learning unit 111, the input data obtained by performing gain correction on the prefetched image data to adjust the brightness. In the learning step, the data preprocessor 110 also transmits the frame image data to the evaluation unit 112.

The model learning unit 111 can be configured to include a Convolutional neural network (CNN) or the like. The model learning unit 111 builds a prediction model that estimates the frame image data by using a convolutional filter layer for extracting a feature such as an edge, a color, or a shape from the input data based on the prefetched image data, a pooling layer, an activation function for performing nonlinear processing, and the like. With this, the model learning unit 111 generates the estimated image data. This prediction model corresponds to the learning model 104 shown in Fig. 1. The estimated image data is transmitted to the evaluation unit 112, and compared with the frame image data received from the data preprocessor 110. Thus, the evaluation value (error) is calculated. As the evaluation value, for example, the following equation (1) expressing a loss function may be used. ${L}_{\left(θ\right)} = \frac{1}{n} {{\sum }_{i = 1}^{n} \left‖F\left({X}_{i}; θ\right)-{Y}_{i}\right‖}_{2}^{2}$ (1)

Here, L indicates a loss function for measuring the error between the frame image data and the estimated image data, Yi indicates the ith frame image data, and Xi indicates the ith prefetched image data. n indicates the total number of image data used for learning. F indicates a function which collectively represents the operations performed in the respective layers of the CNN, and θ indicates a CNN parameter such as a filter or a bias. ∥***∥ indicates the L2 norm, and represents the root sum square of the internal elements sandwiched between ∥ and ∥. Instead of equation (1), a value obtained by generating the difference data between the frame image data and the estimated image data and summing the outputs of the respective pixels of the difference data, or the like may be used as the evaluation value representing the comparison result between the frame image data and the estimated image data.

The evaluation value is fed back to the model 104 by using an error backpropagation method or the like to update (learn) the CNN parameter (filter, weight, bias, or the like). Instead of the error backpropagation method, another learning method such as a steepest descent method or Momentum may be employed. The model learning unit 111 continues learning until the evaluation value becomes equal to or smaller than the predetermined threshold. When the evaluation value becomes equal to or smaller than the threshold, the learning is completed, and the data preprocessor 110 switches the transfer destination of frame image data from the evaluation unit 112 to the model learning unit 111. The model learning unit 111 executes bit depth expansion of the frame image data, thereby generating the expanded frame image data. The expanded frame image data is transmitted to the image correction unit 105 shown in Fig. 1.

The functional block diagrams according to this embodiment have been described with reference to Figs. 1 and 2, but these functional block configurations are merely examples, and the disclosure is not limited thereto. For example, one functional block may be constituted by some functional blocks, or some functional blocks may be combined into one functional block. Furthermore, the functional blocks may not be incorporated in the same apparatus, and may be constituted by different apparatuses connected each other via a signal path.

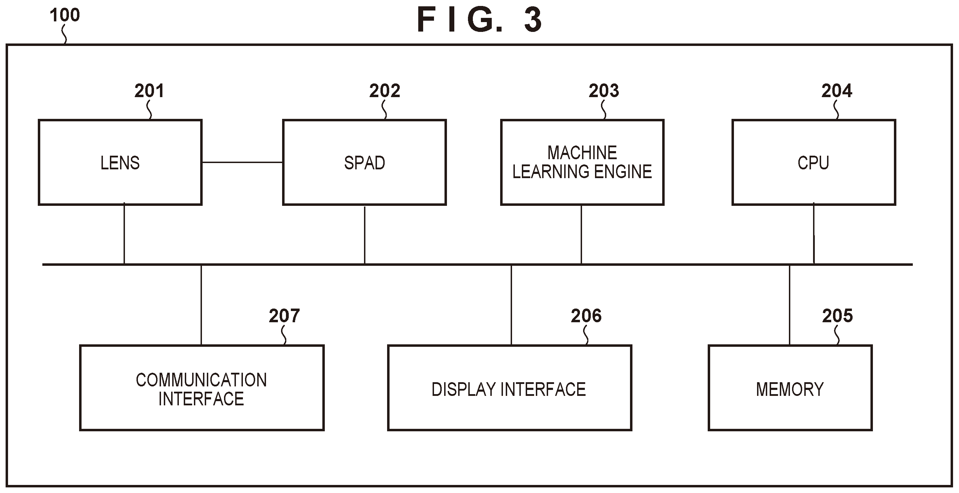

Fig. 3 is a view showing an example of the hardware configuration according to this embodiment. The photoelectric conversion apparatus 100 includes a lens 201, an SPAD sensor 202, a machine learning engine 203, a Central Processing Unit (CPU) 204, a memory 205, a display interface 206, and a communication interface 207.

The lens 201 corresponds to the imaging optical system 101 shown in Fig. 1. The lens 201 is configured to include one or more light receiving lenses, and forms an object image on the SPAD sensor 202. The lens 201 may have a focus function for changing the focusing position, a zoom function for changing the focal distance, and an aperture function for adjusting the light receiving amount. When the focus function, zoom function, aperture function, and the like are provided, the control unit 106 controls them.

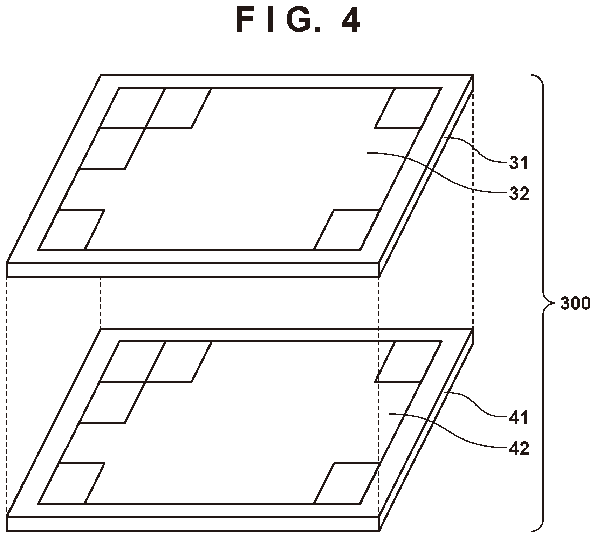

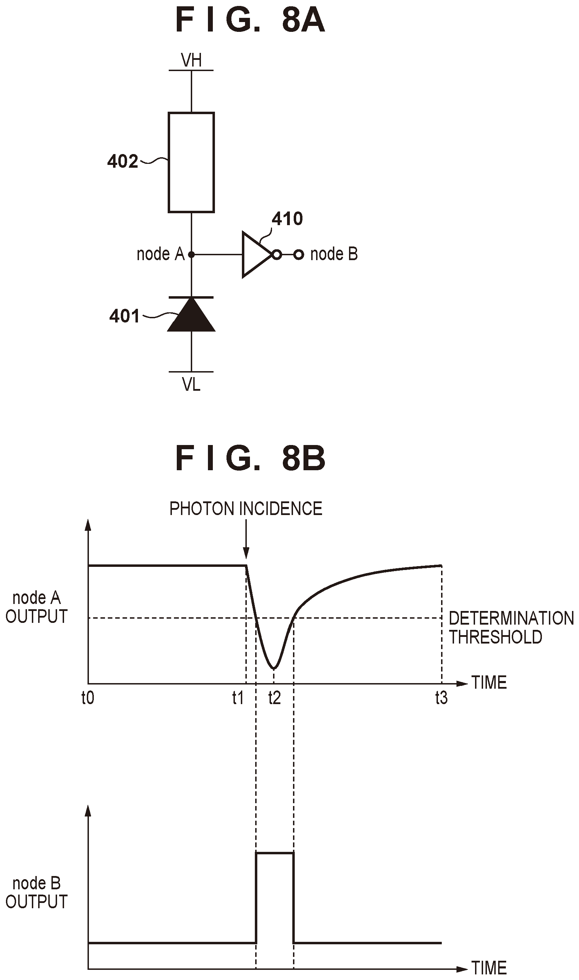

The SPAD sensor 202 corresponds to the photoelectric converter 102 shown in Fig. 1, and photoelectrically converts the object image formed on the imaging surface to obtain an image. Details of the SPAD sensor 202 will be described later with reference to Figs. 4 to 8. In the configuration shown in Fig. 3, the SPAD sensor 202 is used as the photoelectric converter 102, but the disclosure is not limited to this. The photoelectric converter 102 may be formed by another photoelectric conversion device as long as image data (prefetched image data) can be read out during the exposure period. As will be described later with reference to Fig. 8, since the SPAD sensor 202 is theoretically free from readout noise, no readout noise is added to the prefetched image data so the image quality does not deteriorate. Therefore, in this embodiment, the SPAD sensor 202 is used as the photoelectric converter 102.

The machine learning engine 203 corresponds to the image processor 103 shown in Fig. 1. The machine learning engine 203 can be configured to include a Graphics Processing Unit (GPU), a Field Programmable Gate Array (FPGA), an Application Specific Integrated Circuit (ASIC), or the like. In the configuration shown in Fig. 3, the machine learning engine 203 is configured as a module different from the CPU 204, but may be configured to execute machine learning in the CPU 204.

The CPU 204 constitutes the image correction unit 105 and the control unit 106 shown in Fig. 1. The memory 205 can be configured to include a volatile memory such as a Random Access Memory (RAM) and a nonvolatile memory such as a Read Only Memory (ROM). Some functional blocks of the photoelectric conversion apparatus 100 shown in Fig. 1 are implemented by the CPU 204 executing computer programs stored in the memory 205. The display interface 206 corresponds to the display unit 108 shown in Fig. 1, and can be constituted by, for example, a liquid crystal display, an organic Electroluminescence (EL) monitor, or the like. The communication interface 207 is a Physical layer (PHY) of wired or wireless communication, and constitutes the communication unit 109 shown in Fig. 1.

Next, with reference to Figs. 4 to 8, the detailed configuration and operation of the SPAD sensor 202 will be described. Fig. 4 is a view showing the configuration of a stacked photoelectric conversion device. A photoelectric conversion device 300 is an example of the SPAD sensor 202. The photoelectric conversion device 300 is formed by stacking and electrically connecting two chips of a sensor chip 31 and a circuit chip 41. A pixel region 32 is arranged in the sensor chip 31, and a circuit region 42 for processing a signal detected in the pixel region 32 is arranged in the circuit chip 41.

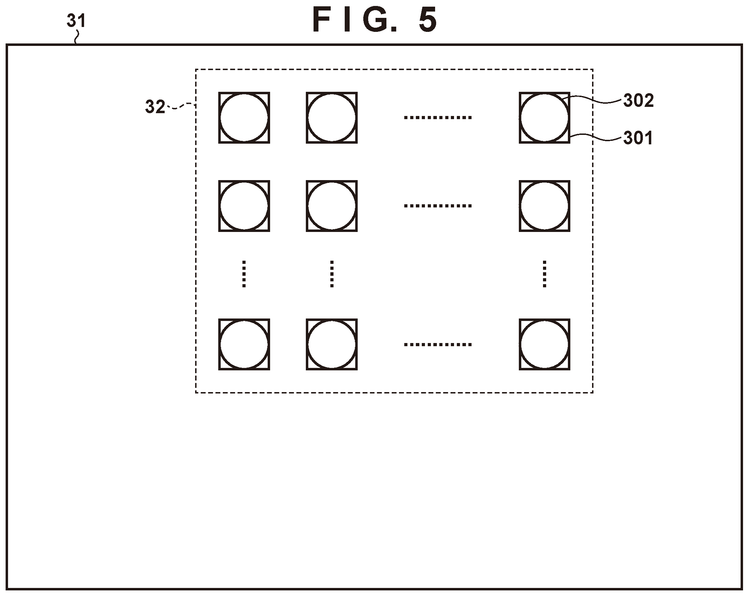

Fig. 5 is a view showing the arrangement of the sensor chip 31. In the sensor chip 31, a plurality of pixels 301 each including a photoelectric conversion element 302 including an APD are arranged in an array to form a plurality of rows and a plurality of columns, thereby forming the pixel region 32.

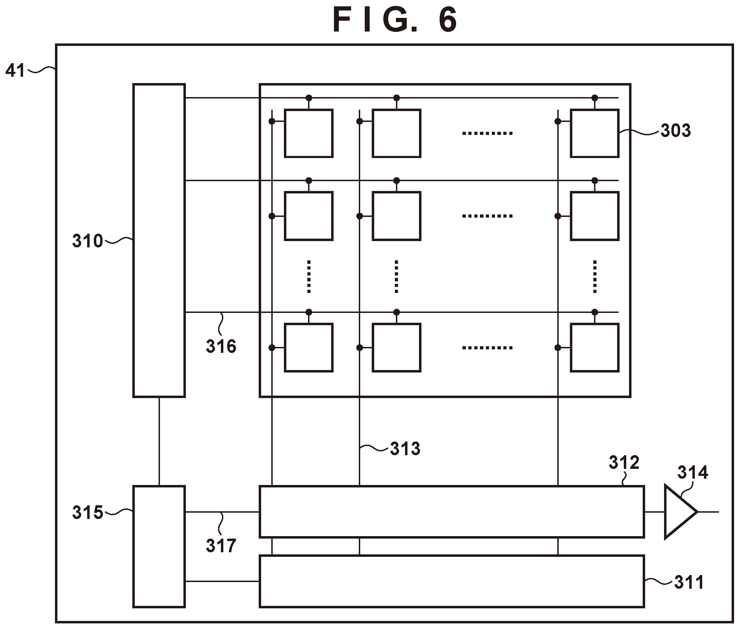

Fig. 6 is a view showing an example of the configuration of the circuit chip 41. The circuit chip 41 can include pixel circuits 303 each configured to process charges photoelectrically converted by the photoelectric conversion element 302 shown in Fig. 5, a readout circuit 312, a control pulse generation unit 315, a horizontal scanning circuit 311, output lines 313, and a vertical scanning circuit 310. Each photoelectric conversion element 302 shown in Fig. 5 and each pixel circuit 303 shown in Fig. 6 can be electrically connected via a connection wiring provided for each pixel. The vertical scanning circuit 310 receives a control pulse supplied from the control pulse generation unit 315, and supplies a control pulse to each pixel 301. A logical circuit such as a shift register or an address decoder is used for the vertical scanning circuit 310. A signal output from the photoelectric conversion element 302 of each pixel 301 is processed by the pixel circuit 303. A counter, a memory, and the like are provided in the pixel circuit 303, and the memory holds a digital value. The horizontal scanning circuit 311 inputs, to the pixel circuit 303, a control pulse for sequentially selecting columns to read out a signal from the memory of each pixel 301 that holds the digital signal. As for a selected column, a signal is output to the output line 313 from the pixel circuit 303 of the pixel 301 selected by the vertical scanning circuit 310. The signal output to the output line 313 is output via an output circuit 314 to the machine learning engine 203 outside the photoelectric conversion device 300. The function of the pixel circuit 303 shown in Fig. 6 is not necessarily provided to each of all the pixels 301. For example, one pixel circuit 303 may be shared by the plurality of pixels 301 to sequentially perform signal processing.

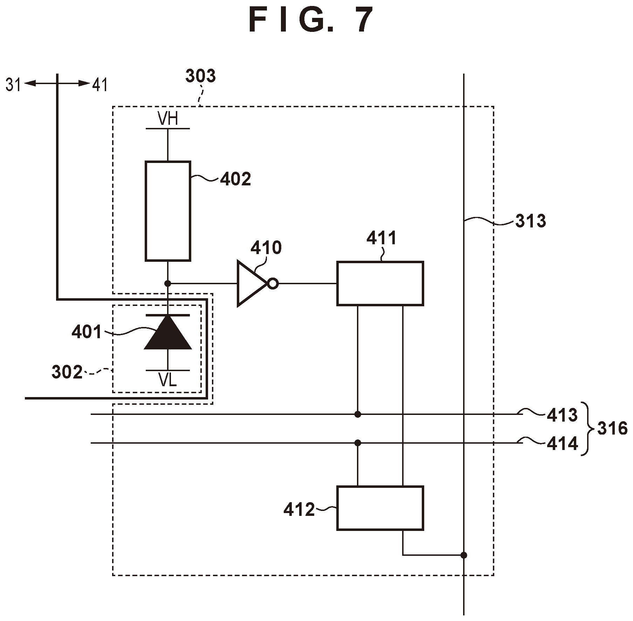

Fig. 7 shows an example of a block diagram including equivalent circuits shown in Figs. 5 and 6. In Fig. 4, the photoelectric conversion element 302 including an APD 401 shown in Fig. 7 is provided in the sensor chip 31, and the remining components are provided in the circuit chip 41. The APD 401 generates charge pairs corresponding to incident light by photoelectric conversion. The anode of the APD 401 is supplied with a voltage VL. The cathode of the APD 401 can be supplied with a voltage VH higher than the voltage VL supplied to the anode. A reverse bias voltage that causes the APD 401 to perform an avalanche multiplication operation is supplied between the anode and the cathode. By setting the state in which such the voltage is supplied, charges generated by the incident light cause avalanche multiplication, thereby generating an avalanche current. In a case of supplying the reverse bias voltage, there is a Geiger mode in which the APD is operated when the potential difference between the anode and the cathode is higher than the breakdown voltage, and a linear mode in which the APD is operated when the potential difference between the anode and the cathode is around or lower than the breakdown voltage. An APD operated in the Geiger mode is called an SPAD. In the Geiger mode, for example, the voltage VL is -30 V and the voltage VH is 1 V. The pixel circuit 303 includes a quench element 402, a waveform shaping circuit 410, a counter circuit 411, and a selection circuit 412. In one embodiment in this specification, the pixel circuit 303 only needs to include at least one of the quench element 402, the waveform shaping circuit 410, the counter circuit 411, and the selection circuit 412.

The quench element 402 is connected between a power supply for supplying the voltage VH and the APD 401. The quench element 402 is formed by a switch element such as a transistor and a resistance element such as a resistor using polysilicon. When a photocurrent is multiplied by avalanche multiplication in the APD 401, a current generated by the multiplied charges flows to the connection node between the APD 401 and the quench element 402. Due to the voltage drop caused by this current, the cathode potential of the APD 401 drops, and the APD 401 no longer form electron avalanche. Due to this, the avalanche multiplication in the APD 401 stops. Thereafter, since the voltage VH is supplied to the cathode of the APD 401 via the quench element 402, the voltage supplied to the cathode of the APD 401 returns to the voltage VH. That is, the operation region of the APD 401 enters the Geiger mode again. In this manner, the quench element 402 functions as a load circuit (quench circuit) at the time of signal multiplication by avalanche multiplication, and serves to suppress avalanche multiplication by suppressing the voltage supplied to the APD 401 (quenching operation). The quench element 402 also serves to set the operation region of the APD 401 to the Geiger mode again after suppressing avalanche multiplication.

The waveform shaping circuit 410 outputs a pulse signal by shaping the potential change of the cathode of the APD 401 obtained at the time of detection of a photon. As the waveform shaping circuit 410, for example, an inverter circuit is used. Fig. 7 shows an example in which one inverter is used as the waveform shaping circuit 410, but a circuit obtained by serially connected a plurality of inverters may be used. Alternatively, another circuit having the waveform shaping effect may be used as the waveform shaping circuit 410.

The counter circuit 411 counts a pulse signal output from the waveform shaping circuit 410, and holds a count value. It can be said that the counter circuit 411 counts the output when the APD 401 detects a photon. When a control pulse pRES is supplied to the counter circuit 411 via a driving line 413 from the vertical scanning circuit 310 shown in Fig. 6, the signal (count value) held in the counter circuit 411 is reset.

The selection circuit 412 is supplied with a control pulse pSEL from the vertical scanning circuit 310 shown in Fig. 6 via a driving line 414, thereby switching between electrical connection and non-connection of the counter circuit 411 and the output line 313. The selection circuit 412 includes, for example, a buffer circuit for outputting a signal.

When the count value in the counter circuit 411 is read out via the output line 313, since the count value is already digital data, no readout noise is superimposed. Even if the count value is read out from the counter circuit 411 during the exposure period, it does not influence the operation of the APD 401, and therefore the signal can be read out non-destructively.

A switch element such as a transistor may be arranged between the quench element 402 and the APD 401 or between the photoelectric conversion element 302 and the pixel circuit 303 to switch electric connection. Similarly, a switch element such as a transistor may electrically switch the supply of the voltage VL supplied to the APD 401.

Figs. 8A and 8B are views schematically showing the relationship between the operation of the APD 401 and the output signal. Fig. 8A is a view showing the APD 401, the quench element 402, and the waveform shaping circuit 410 out of the components shown in Fig. 7. The input side of the waveform shaping circuit 410 is indicated by node A and the output side of the waveform shaping circuit 410 is indicated by node B. The upper view of Fig. 8B shows the waveform change of node A shown in Fig. 8A, and the lower view of Fig. 8B shows the waveform change of node B shown in Fig. 8A. During a period from time t0 to time t1, a potential difference of VH - VL is applied to the APD 401. When a photon enters at time t1, an avalanche multiplication current flows through the quench element 402, thereby dropping the voltage of node A. If the voltage drop amount becomes larger and the potential difference applied to the APD 401 becomes smaller, the avalanche multiplication in the APD 401 stops, and the voltage level of node A does not drop to a value less than a given value. After that, a current that compensates for the voltage drop from the voltage VH flows through node A, and node A is stabilized at the original potential level at time t3. At this time, a portion of the output waveform of node A, which exceeds a given threshold, is shaped by the waveform shaping circuit 410, and output as a signal from node B.

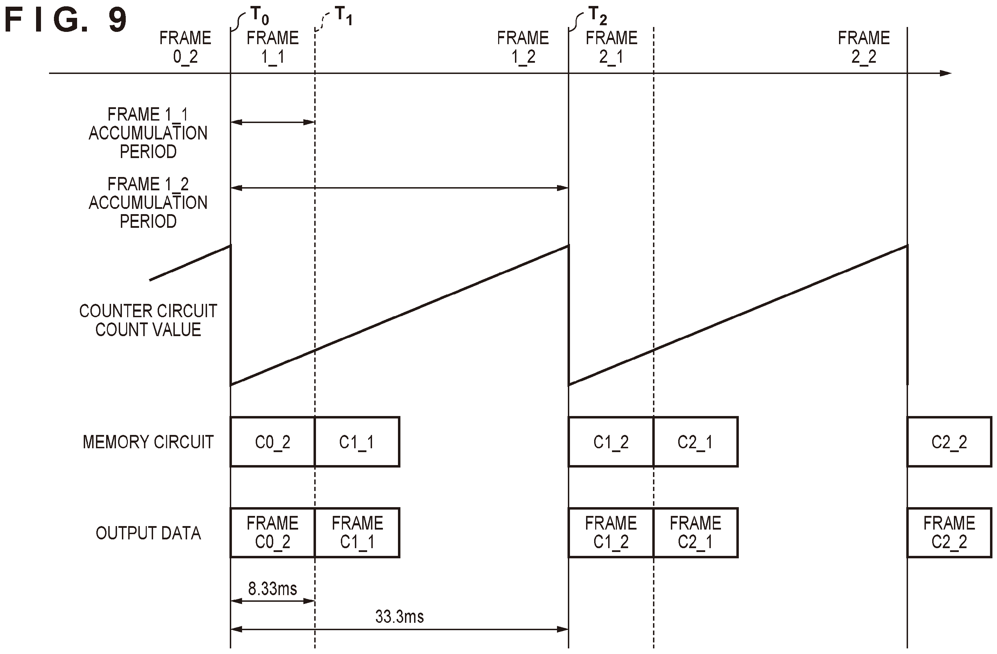

Fig. 9 is a view for explaining a method of non-destructively reading out the image data from the SPAD sensor 202 during the exposure period. In Fig. 9, an explanation will be given assuming that the length of one frame period (corresponding to the exposure period for obtaining one frame image) is 33.3 ms, that is, the frame rate is 30 fps. However, the disclosure is not limited to this, and any frame rate may be set. In Fig. 9, a period up to 1/4 of one frame is defined as a frame 1_1, and divided from a frame 1_2. The frame 1_1 has an accumulation period (8.33 ms) from starting time T₀ to time T₁ of the frame 1-1, and the frame 1_2 has an accumulation period (33.3 ms) from time T₀ to time T₂. The accumulation period of the frame 1_1 and the accumulation period of the frame 1_2 partially overlap. That is, the signal of prefetched image data is always included in the signal of frame image data. This relationship does not change even if the shooting target is a moving object. Accordingly, this method for performing model learning using the prefetched image data and the frame image data can accurately calculate the evaluation value, and therefore has high learning efficiency. In addition, as described with reference to Fig. 7, data can be read out non-destructively from the SPAD sensor 202 even during the exposure period. Hence, the prefetched image data is generated based on count values read out from the counter circuits 411 of the plurality of pixels 301 at time T₁ during the exposure period (frame 1_2). Thereafter, the frame image data is generated based on count values read out from the counter circuits 411 of the plurality of pixels 301 after the exposure period (frame 1_2) is completed.

In this embodiment, a case has been described in which the prefetched image data is read out once in one frame, but the prefetched image data may be read out twice or more. In addition, prefetched image data readout interval is not limited. As described above, unlike a CMOS sensor, the SPAD sensor 202 has no readout noise so the original signal does not deteriorate even after multiple readout operations. Therefore, the number of prefetched image data readout operations may be freely set. The counter circuit 411 obtains a count value C1_1 and a count value C1_2 at time T₁ and time T₂, respectively. When the count value C1_2 is obtained, the counter circuit is reset. The count values C1_1 and C1_2 are temporarily stored in a memory circuit provided in the pixel circuit 303 shown in Fig. 6. The count values temporarily stored in the memory circuits are sequentially output for each row from the photoelectric conversion device 300 via the readout circuit 312 shown in Fig. 6. As described above, two image data of the frame 1_1 and the frame 1_2 are read out and transmitted to the machine learning engine 203 in the latter stage.

Fig. 10 is a schematic view for explaining bit depth expansion according to this embodiment. An explanation will be given using images obtained by shooting a horizontal gradation pattern shown in Fig. 10. It should be noted that Fig. 10 emphasizes the tone level difference in the image for the sake of explanation.

First, in the learning step, the prefetched image data read out in the frame 1_1 shown in Fig. 9 is transmitted to the data preprocessor 110. A prefetched image 501a is the image obtained from the prefetched image data. The frame image data read out in the frame 1_2 shown in Fig. 9 is transmitted to the evaluation unit 112 via the data preprocessor 110. A frame image 501d is the image obtained from the frame image data.

The prefetched image data is transmitted to the data preprocessor 110, and undergoes gain correction (applied with a gain) according to the exposure time ratio relative to the frame image data. Thus, the input data is generated. An input image 501b is the image obtained from the input data. It can be seen that the tone level difference is increased by the gain in the input image 501b compared to the prefetched image 501a, so that the gradation smoothness is lost. The input data is transmitted to the model learning unit 111, where the CNN executes tone interpolation (bit depth expansion) to generate estimated image data. The estimated image data is transmitted to the evaluation unit 112 and compared with the frame image data. Thus, the evaluation value (error) is calculated. Until the evaluation value becomes equal to or smaller than the predetermined threshold, the model learning unit 111 continues the learning of the model 104, and the CNN parameter such as the filter, weight, or bias is updated. An estimated image 501c is the image obtained from the estimated image data after the learning of the model 104 is completed.

After the learning of the model 104 is completed, the image processor 103 transitions to the output step, and the frame image data is transmitted to the data preprocessor 110. The data preprocessor 110 applies the same gain to the frame image data as to the prefetched image data, and transmits the frame image data to the model learning unit 111. In the model learning unit 111, the CNN executes tone interpolation, thereby generating the expanded frame image data. An expanded frame image 501e is the image obtained from the expanded frame image data. The expanded frame image 501e is brighter than the frame image 501d by the gain. Therefore, the expanded frame image data is transmitted from the model learning unit 111 (image processor 103) to the image correction unit 105, and is divided by the gain (applied with (1/gain)). With this, an expanded frame image 501f can be obtained from the divided expanded frame image data. The divided expanded frame image data may be stored in a recording medium by the recording unit 107, or may be transmitted to the outside of the photoelectric conversion apparatus 100 via the communication unit 109. In this embodiment, the divided expanded frame image data is transmitted to the display unit 108, and may be displayed as the expanded frame image 501f. For example, there can be a case in which the illuminance in the shooting environment decreases so that a gain is applied to the frame image data read out in the frame 1_2. Even in this case, by using the value below the decimal point generated due to the dividing, the expanded frame image data with proper exposure can be generated without increasing the tone level difference. That is, even in a case where the illuminance in the shooting environment is low so that the gain is increased, the gradation smoothness of the expanded frame image 501f obtained from the expanded frame image data can be maintained. In this manner, the photoelectric conversion apparatus 100 according to this embodiment improves the quality of an obtained image.

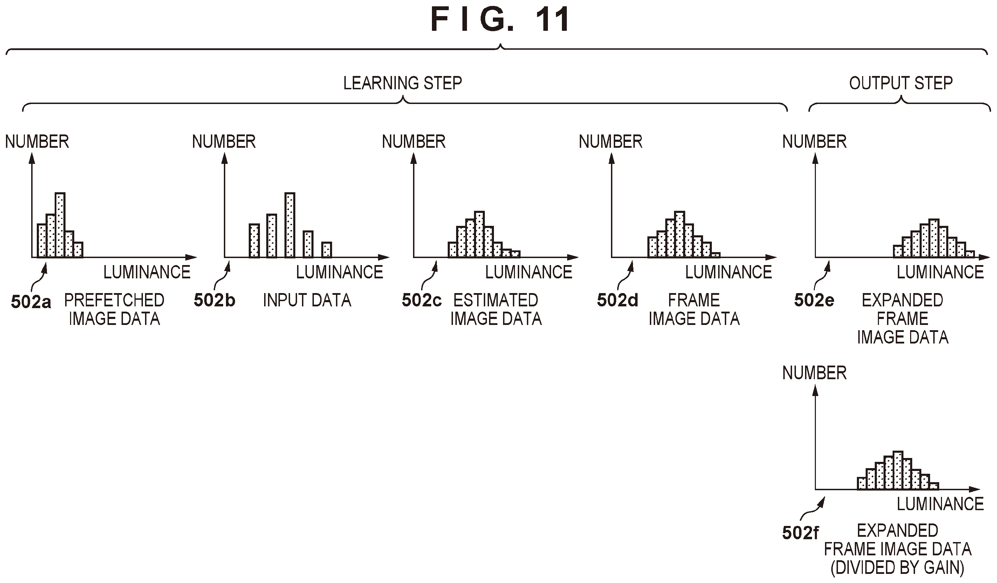

Next, with reference to Fig. 11, bit depth expansion (tone interpolation) will be described using histograms when shooting a natural image. Fig. 11 shows histograms 502a to 502f of prefetched image data, input data, estimated image data, frame image data, expanded frame image data, and divided expanded frame image data, respectively. The prefetched image data is transmitted to the data preprocessor 110, and a gain according to the exposure time ratio relative to the frame image data is applied. With this, the histogram 502a of the prefetched image data changes to the histogram 502b of the input data. The histogram 502b of the input data has larger difference between tones by the gain, resulting in gaps in the histogram. This is caused by the tone jump (loss of tone) which occurred in the input image 501b. The input data is transmitted to the model learning unit 111, where the CNN executes tone interpolation (bit depth expansion). The histogram 502c of the estimated image data after the learning is completed has a smaller error with the histogram 502e of the frame image data than the histogram 502b of the input data.

Then, in the output step, the data preprocessor 110 applies the same gain to the frame image data as to the prefetched image data, and then transmits the frame image data to the model learning unit 111 where image processing is performed. With this, the expanded frame image data brighter than the frame image data by the gain is generated (histogram 502e). The image correction unit 105 divides the expanded frame image data by the gain. With this, the histogram 502e changes to the divided histogram 502f. The difference between the histogram 502f of the divided expanded frame image data and the histogram 502d of the frame image data is small, and there is no particular change. Even in a case where the illuminance in the shooting environment decreases so that a gain is applied to the frame image data, by using the value below the decimal point generated due to the dividing, the brightness can be changed while the gapless histogram is maintained, as shown in the histogram 502f.

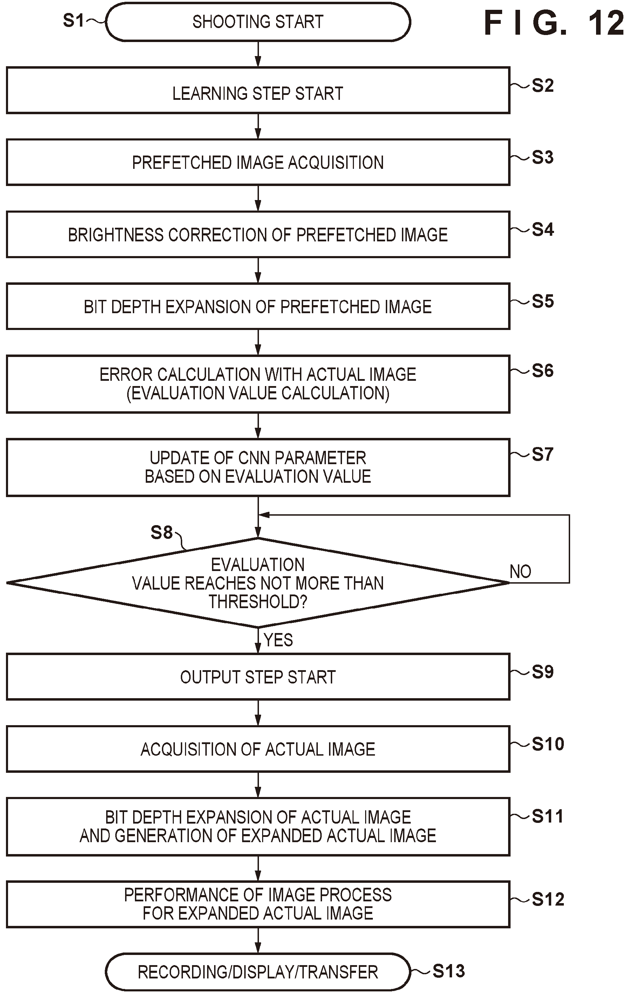

Fig. 12 is a flowchart showing an example of the operation of the photoelectric conversion apparatus 100 according to this embodiment. After shooting is started in step S1, the learning step is started in step S2. In the learning step, first, prefetched image data is read out from the photoelectric converter 102 in step S3. In step S4, the data preprocessor 110 performs, on the readout prefetched image data, gain correction according to the ratio of the period length of the frame 1_1 and the period length of the frame 1_2, thereby correcting brightness. Then, in step S5, the prefetched image data is transmitted to the model learning unit 111, where the CNN executes bit depth expansion (tone interpolation) to generate estimated image data. In step S6, the estimated image data is transmitted to the evaluation unit 112, where it is compared with frame image data, and an evaluation value (error), which is a result of comparison between the estimated image data and the frame image data, is calculated. In step S7, the calculated evaluation value is transmitted to the CNN of the model learning unit 111 by using an error backpropagation method, and various kinds of parameters such as the filter, weight, and bias are updated (learned). In step S8, the evaluation value is compared with a threshold. While the evaluation value exceeds the threshold, the learning of the model 104 in step S7 is repeated.

In step S8, if the evaluation value becomes equal to or smaller than the threshold, the process transitions to step S9, and the output step is started. In step S10, frame image data is read out. In step S11, the frame image data is transmitted to the model learning unit 111, where the CNN using the learned model executes bit depth expansion to obtain expanded frame image data. The expanded frame image data is transmitted from the image processor 103 to the image correction unit 105. In step S12, the image correction unit 105 performs various kinds of correction processes on the expanded frame image data. In step S13, the expanded frame image data having undergone the correction processes by the image correction unit 105 is transmitted to one or more of the recording unit 107, the display unit 108, and the communication unit 109 via the control unit 106, where it is recorded in a recording medium, displayed as an image on a display monitor, transferred as an image to an external apparatus or the like, respectively.

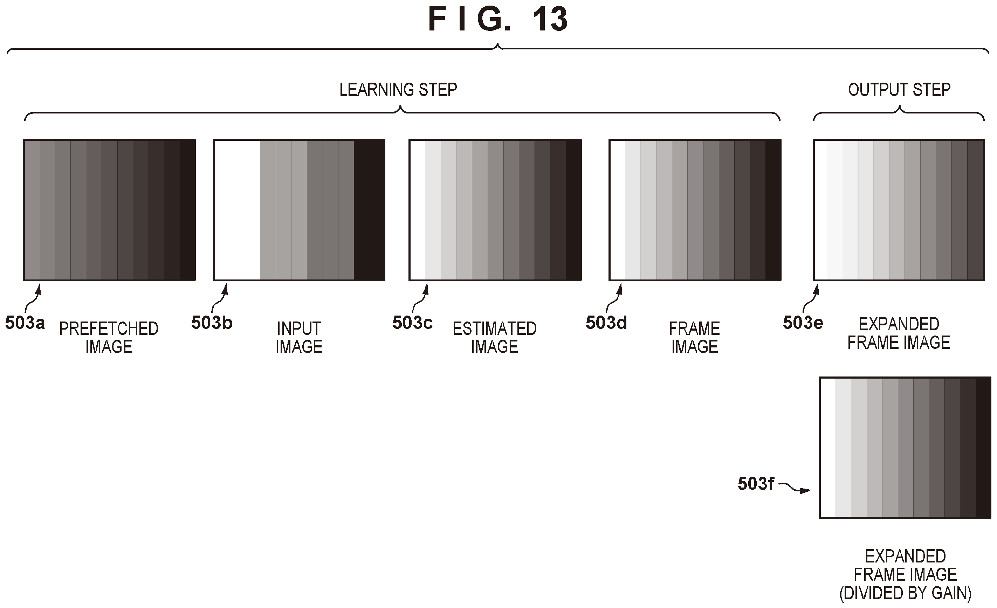

Next, with reference to Fig. 13, the second embodiment according to the disclosure will be described. In this embodiment, some tone data of prefetched image data are removed. For example, a data preprocessor 110 removes lower bit data of prefetched image data, thereby generating input data to be input to a model learning unit 111. The model learning unit 111 generates estimated image data from the input data from which some tone data of the prefetched image data have been removed. This process enables expansion of the bit depth equal to or greater than the exposure time difference between prefetched image data and frame image data.

Fig. 13 shows schematic views of images in the learning step and the output step. As in Fig. 10, an explanation will be given using images obtained by shooting a horizontal gradation pattern. First, prefetched image data is read out from a photoelectric converter 102. A prefetched image 503a is the image obtained from the prefetched image data. Here, in order to compare with the first embodiment described above, the explanation will be given assuming that the prefetched image 503a shown in Fig. 13 is similar to the prefetched image 501a shown in Fig. 10. That is, the explanation will be given assuming that prefetched image data similar to that in the first embodiment is obtained. The prefetched image data is transmitted to the data preprocessor 110, and a gain according to the exposure time ratio relative to frame image data is applied. Furthermore, predetermined lower bit data are removed. Thus, input data is generated. An input image 503b is the image obtained from the input data. The lower bit data may not be removed by the data preprocessor 110 but may be removed when reading out the prefetched image data from the photoelectric converter 102. For example, a counter circuit 411 may be controlled such that the lower bits are not read out.

Due to removal of the lower bit data in addition to gain-up, the brightness step is larger in the input image 503b than in the prefetched image 503a. In addition, the brightness step is larger in the input image 503b than in the input image 501b shown in Fig. 10.

The input data is transmitted to the model learning unit 111, where the CNN executes high gradation processing. An evaluation unit 112 compares the estimated image data generated by the model learning unit 111 with frame image data, thereby calculating an evaluation value (error). As in the first embodiment, CNN parameters such as the filter, bias, and weight are updated in the model learning unit 111 so that the evaluation value becomes equal to or smaller than a predetermined value. An estimated image 503c is the image obtained from the estimated image data after the learning of the model 104 is completed. The estimated image 503c obtained from the estimated image data after the learning is completed has a small error with a frame image 503d obtained from the frame image data.

When the learning of the model 104 is completed, the process transitions from the learning step to the output step. The frame image data is transmitted to the data preprocessor 110, and applied with the same gain as to the prefetched image data. Thereafter, in the model learning unit 111, the CNN executes tone interpolation to generate expanded frame image data. An expanded frame image 503e is the image obtained from the expanded frame image data. The expanded frame image 503e is brighter than the frame image 503d by the gain. Therefore, the expanded frame image data is transmitted from the model learning unit 111 (image processor 103) to an image correction unit 105, where it is divided by the gain. Thus, an expanded frame image 503f can be obtained from the divided expanded frame image data. The divided expanded frame image data may be transmitted to a display unit 108 and displayed as the expanded frame image 503f on a display monitor.

As compared to the expanded frame image 501f obtained from the expanded frame image data generated in the first embodiment described above, the expanded frame image 503f obtained from the expanded frame image data generated in this embodiment has more bits below the decimal point by the number of bits removed from the prefetched image data. Therefore, even in a case where a higher gain than in the first embodiment is applied to the frame image data obtained in shooting with low illuminance or the like, the gradation smoothness can be maintained. That is, this embodiment improves the quality of an obtained image.

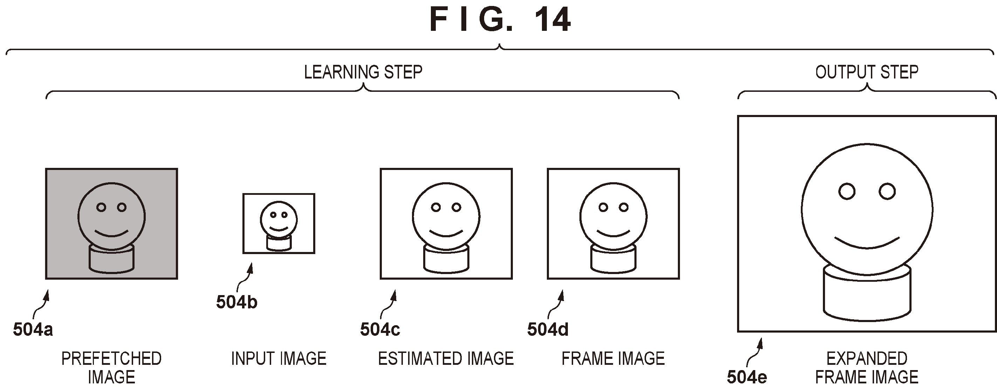

Next, with reference to Fig. 14, the third embodiment according to the disclosure will be described. In this embodiment, a model learning unit 111 executes high-resolution processing. More specifically, a data preprocessor 110 generates input data by removing, from the data output from a plurality of pixels 301 arranged in a photoelectric converter 102 included in prefetched image data, the data of some pixels 301. It can also be said that the data preprocessor 110 generates input data by thinning the data of some pixels 301 from prefetched image data. By executing super-resolution processing and learning, the model learning unit 111 can increase the number of pixels of data included in frame image data.

A functional block diagram and hardware configuration diagram of a photoelectric conversion apparatus 100 according to this embodiment may be the same as those in the first embodiment described above. Therefore, a description will be omitted here. On the other hand, unlike in the first embodiment, the model learning unit 111 according to this embodiment includes a model 104 that executes super-resolution processing on input data. A known RED-Net or the like can be used as the model that executes super-resolution.

Fig. 14 shows steps until expanded frame image data (expanded frame image 504e) is generated in this embodiment. Similar to the above description, a prefetched image 504a is the image obtained from prefetched image data read out in a frame 1_1, and a frame image 504d is the image obtained from frame image data read out in a frame 1_2. The prefetched image 504a is darker than the frame image 504d by the exposure time ratio. Therefore, first, the data preprocessor 110 applies, to the prefetched image data, a gain according to the exposure time ratio. In addition, the data preprocessor 110 reduces the number of pixels included in the prefetched image data (the number of data corresponding to each pixel) by a predetermined ratio. An input image 504b is the image obtained from input data with the reduced number of pixels. Since the number of pixels is reduced, the input image 504b is smaller than the prefetched image 504a.

The input data is transmitted to the model learning unit 111. The model learning unit 111 performs high-resolution processing. With this, the data corresponding to the number of pixels reduced in the input data are restored, and estimated image data is generated. An evaluation unit 112 compares the estimated image data with frame image data, and calculates an evaluation value (error). Until the evaluation value becomes equal to or smaller than a predetermined threshold, the model learning unit 111 continues learning of the model 104, and CNN parameters are updated. An estimated image 504c is the image obtained from the estimated image data after the learning of the model 104 of the model learning unit 111 is completed. The estimated image 504c obtained from the estimated image data after the learning is completed has a small error with the frame image 504d obtained from the frame image data.

After the learning of the model 104 is completed, the process transitions to the output step. In this embodiment, unlike in the learning step, the data preprocessor 110 does not reduce the number of pixels and apply a gain with respect to the frame image data. The frame image data read out in the frame 1_2 is transmitted to the model learning unit 111. The model learning unit 111 performs super-resolution processing on the frame image to generate expanded frame image data. The expanded frame image 504e obtained from the expanded frame image data has an increased number of pixels by the reciprocal of the ratio of the number of pixels reduced from the prefetched image data in the learning step, as compared to the frame image 504d. In this manner, the photoelectric conversion apparatus 100 according to this embodiment enables super-resolution processing on the frame image data. As a result, the quality of an obtained image improves.

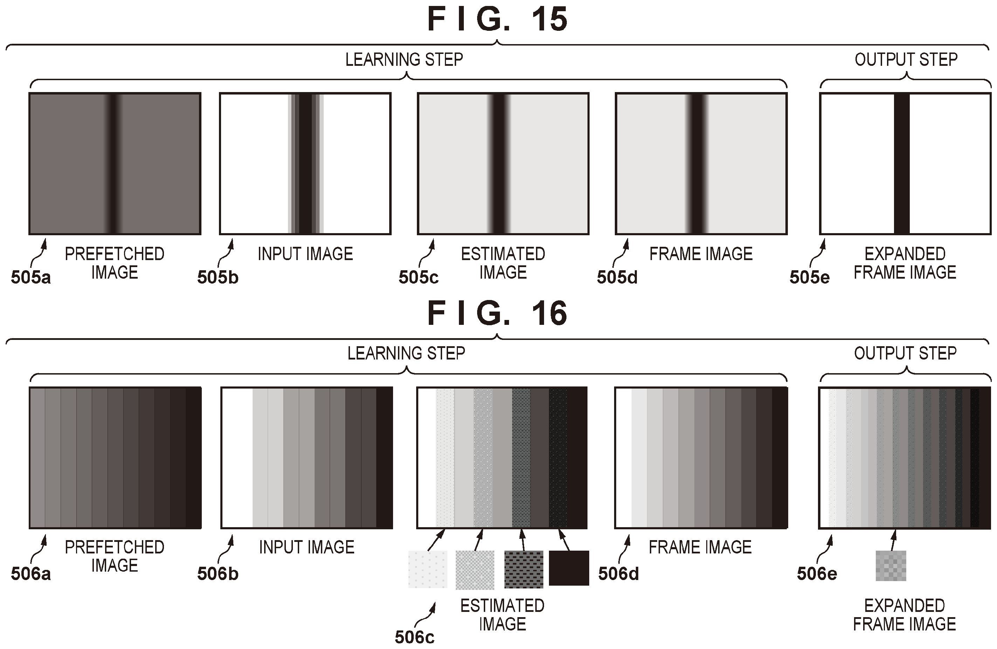

Fig. 15 is a view for explaining the fourth embodiment according to the disclosure. In this embodiment, a model learning unit 111 executes edge enhancement. More specifically, a data preprocessor 110 generates input data by removing a high frequency component from prefetched image data. By executing edge enhancement and learning by the model learning unit 111, edge enhancement with high accuracy of a frame image obtained from frame image data can be achieved.

A functional block diagram and hardware configuration diagram of a photoelectric conversion apparatus 100 according to this embodiment may be the same as those in the first embodiment described above. Therefore, a description will be omitted here. On the other hand, unlike in the first embodiment, the model learning unit 111 according to this embodiment includes a model 104 that executes edge enhancement on input data.

Fig. 15 shows steps until expanded frame image data (expanded frame image 505e) is generated in this embodiment. Here, a case of shooting a vertical black line will be taken as an example and described. Similar to the above description, a prefetched image 505a is the image obtained from prefetched image data read out in a frame 1_1, and a frame image 505d is the image obtained from frame image data read out in a frame 1_2.

The prefetched image 505a is darker than the frame image 505d by the exposure time ratio. Therefore, first, the data preprocessor 110 applies, to the prefetched image data, a gain according to the exposure time ratio. In addition, in order to remove the high frequency component, the data preprocessor 110 applies a low-pass filter in a spatial direction. Thus, input data is generated. An input image 505b is the image obtained from the input data. In the input image 505b, the black line is more blurred than in the prefetched image 505a.

The input data is transmitted to the model learning unit 111, where edge enhancement is executed by a CNN, and estimated image data is generated. An evaluation unit 112 compares the estimated image data with frame image data, and calculates an evaluation value (error). Until the evaluation value becomes equal to or smaller than a predetermined threshold, the model learning unit 111 continues learning of the model 104, and CNN parameters are updated. An estimated image 505c is the image obtained from the estimated image data after the learning of the model 104 of the model learning unit 111 is completed. The estimated image 505c obtained from the estimated image data after the learning is completed has a small error with the frame image 505d obtained from the frame image data.

After the learning of the model 104 is completed, the process transitions to the output step. The data preprocessor 110 transmits the frame image data to the model learning unit 111 without applying the low-pass filter and gain. The model learning unit 111 performs edge enhancement processing on the frame image data, thereby generating expanded frame image data. In the expanded frame image 505e obtained from the expanded frame image data, edges are enhanced as compared to the frame image 505d as shown in Fig. 15. In this manner, the photoelectric conversion apparatus 100 according to this embodiment can execute high-precision edge enhancement. As a result, the quality of an obtained image improves.

Next, with reference to Fig. 16, the fifth embodiment according to the disclosure will be described. In this embodiment, visual gradation is improved by performing halftone processing between image tones in the spatial direction.

A functional block diagram and hardware configuration diagram of a photoelectric conversion apparatus 100 according to this embodiment may be the same as those in the first embodiment described above. Therefore, a description will be omitted here. On the other hand, unlike in the first embodiment, a model learning unit 111 according to this embodiment includes a model 104 that executes halftone processing between tones on input data.

Fig. 16 shows steps until expanded frame image data (expanded frame image 506e) is generated in this embodiment. Similar to the above description, a prefetched image 506a is the image obtained from prefetched image data read out in a frame 1_1, and a frame image 506d is the image obtained from frame image data read out in a frame 1_2.

The prefetched image 506a is darker than the frame image 506d by the exposure time ratio. Therefore, as in the first embodiment, a data preprocessor 110 applies a gain according to the exposure time ratio on the prefetched image data, thereby generating input data. Similar to the first embodiment, in an input image 506b obtained from the input data, the tone difference is increased by the gain, so that the gradation smoothness is lost.

The input data is transmitted to the model learning unit 111, and the CNN executes halftone processing between tones. More specifically, an edge portion is specified by using a feature amount extraction filter. In a region determined not to be the edge portion, if the tone difference between adjacent pixels is larger than a predetermined value, halftone processing is performed in a predetermined range centered on the boundary line, and estimated image data is generated. The tones of the adjacent pixels are used as binary values used for the halftone processing. An evaluation unit 112 compares the estimated image data with frame image data, and calculates an evaluation value (error). Until the evaluation value becomes equal to or smaller than a predetermined threshold, the model learning unit 111 continues learning of the model 104, and CNN parameters are updated. An estimated image 506c is the image obtained from the estimated image data after the learning of the model 104 of the model learning unit 111 is completed.

After the learning of the model 104 is completed, the process transitions to the output step. The data preprocessor 110 transmits the frame image data to the model learning unit 111 without applying a gain. The model learning unit 111 performs halftone processing between tones on the frame image data, thereby generating expanded frame image data. In this embodiment, the model 104 performs halftone processing on the input data and the frame image data. With this, the photoelectric conversion apparatus 100 according to this embodiment can obtain, from the frame image 506d, the expanded frame image 506e with improved visual gradation.

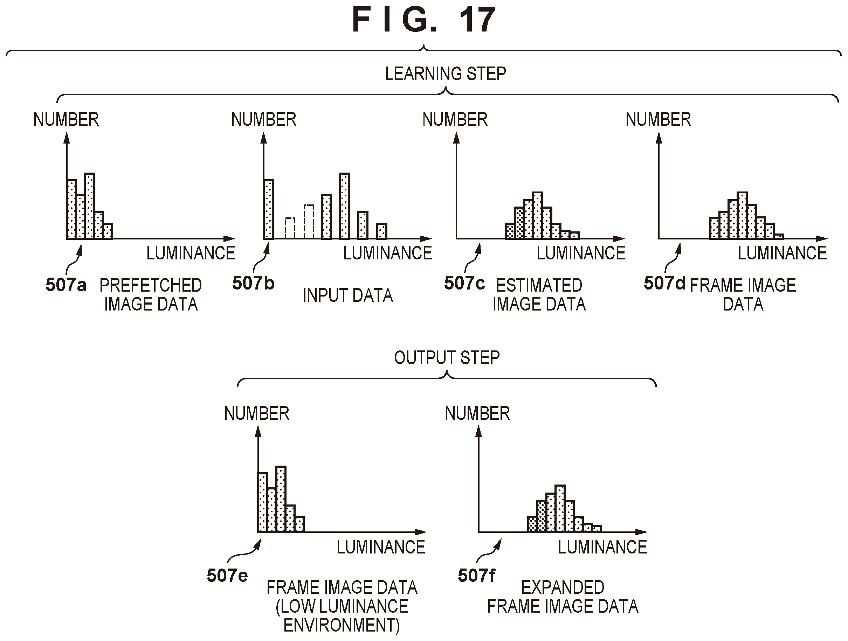

Next, with reference to Fig. 17, the sixth embodiment according to the disclosure will be described. In this embodiment, an example will be described in which the exposure time of prefetched image data is set short enough to cause shadow detail loss in the image, thereby expanding the dynamic range of the frame image. In a pixel 301 where shadow detail loss occurs, the pixel value indicates a dark level where no light is detected. For example, when an APD 401 detects no photon so that the count value in a counter circuit 411 is 0, shadow detail loss occurs.

A functional block diagram and hardware configuration diagram of a photoelectric conversion apparatus 100 according to this embodiment may be the same as those in the first embodiment described above. Therefore, a description will be omitted here. A model learning unit 111 in this embodiment includes a model 104 that predicts the output value of the dark level data in input data, in addition to performing bit depth expansion (tone interpolation) described in the first embodiment. With this, the model 104 can perform dynamic range expansion processing of dark level data in the input data.

With reference to Fig. 17, bit depth expansion (tone interpolation) and dynamic range expansion of dark level data will be described using histograms when shooting a natural image. Fig. 17 shows histograms 507a to 507f of prefetched image data, input data, estimated image data, frame image data, frame image data in a low illuminance environment, and expanded frame image data, respectively.

As for the histogram 507a of the prefetched image data, the exposure time before frame image data is read out is not changed but the exposure time before prefetched image data is read out is significantly shortened as compared to the first embodiment described above. Therefore, compared to the histogram 502a of prefetched image data shown in Fig. 11, the histogram 507a includes many pixels 301 whose pixel values are at dark level. The prefetched image data is transmitted to a data preprocessor 110, and a gain according to the exposure time ratio relative to frame image data is applied to generate input data. At this time, the pixel value at dark level remains at dark level even after the gain is applied. Hence, in the histogram 507b of input data, the lower tone, which would have been obtained with a proper exposure time, is lost.

The input data with the histogram 507b is transmitted to the model learning unit 111, where the CNN executes tone interpolation and lower tone restoration processing (dynamic range expansion of dark level data). With this, estimated image data is generated from the input data. An evaluation unit 112 compares the estimated image data with frame image data, and calculates an evaluation value (error). Until the evaluation value becomes equal to or smaller than a predetermined threshold, the model learning unit 111 continues learning of the model 104, and CNN parameters are updated. The histogram 507c is the histogram of the estimated image data after the learning of the model 104 of the model learning unit 111 is completed. The histogram 507c of the estimated image data after the learning is completed has a smaller error with the histogram 507d of frame image data than the histogram 507b of input data.

After the learning of the model 104 is completed, the process transitions to the output step, and the frame image data is transmitted to the data preprocessor 110. The data preprocessor 110 applies the same gain to the frame image data as to the prefetched image data, and transmits the frame image data to the model learning unit 111. At this time, in one embodiment, if the frame image data is in a proper exposure state and includes no shadow detail loss, expanded image data is generated by executing only bit depth expansion (tone interpolation) and gain-up, as in the first embodiment. By dividing the expanded image data by the gain, it can preserve the bits below the decimal point. That is, an effect similar to the effect of the first embodiment can be obtained.

On the other hand, in a situation where the illuminance decreases in the shooting scene so that shadow detail loss occurs even in the frame image data as shown in the histogram 507e, this embodiment can achieve the even greater effect than the first embodiment. The data preprocessor 110 applies a gain to the frame image data with the histogram 507e, and transmits the frame image data to the model learning unit 111, where the CNN executes bit depth expansion and lower tone restoration processing. With this, the expanded frame image data with the histogram 507f having undergone not only bit depth expansion but also dynamic range expansion of dark level data can be obtained. In this case, the expanded frame image data may not be divided by the gain in an image correction unit 105. With this, image data (image) with proper exposure can be generated. In this manner, the photoelectric conversion apparatus 100 according to this embodiment can obtain an image with high quality even in shooting under low illuminance that causes shadow detail loss.

An image processor 103 may include a plurality of models 104. That is, the processes executed by the image processor 103 (model learning unit 111) described in the above embodiments, respectively, may be combined and executed. In that case, an image with higher quality can be obtained using the photoelectric conversion apparatus 100.

Examples of application of the above-described photoelectric conversion apparatus 100 to a photoelectric conversion system, a moving body, and equipment will be described below.

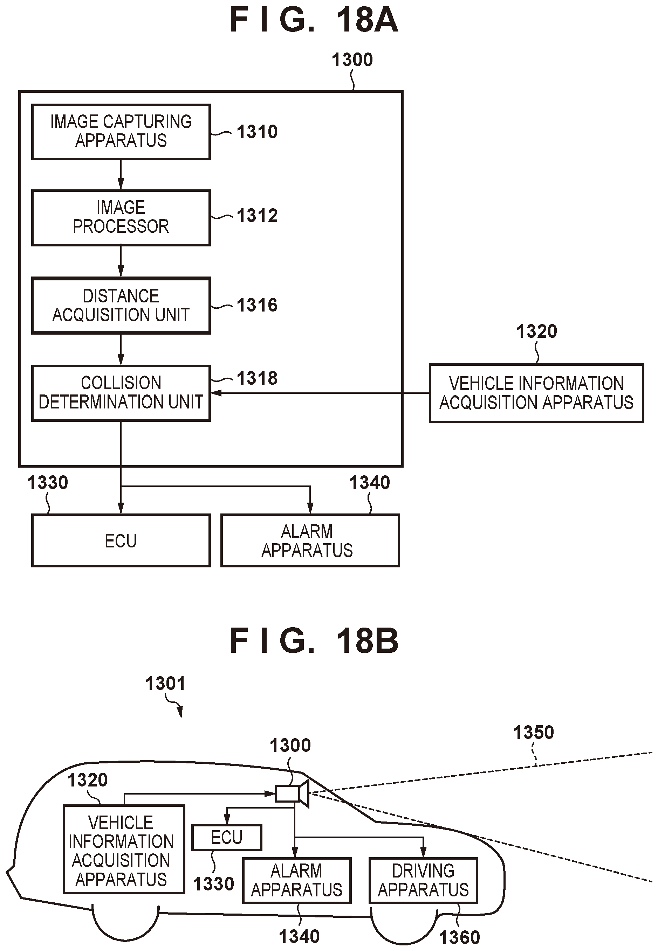

Figs. 18A and 18B are views showing the configuration of a photoelectric conversion system 1300 and a moving body 1301 to which the photoelectric conversion apparatus 100 is applied. Fig. 18A shows an example of a photoelectric conversion system concerning an in-vehicle camera. The photoelectric conversion system 1300 includes an image capturing apparatus 1310. The image capturing apparatus 1310 is the photoelectric conversion apparatus 100 described above. The photoelectric conversion system 1300 includes an image processor 1312 that performs image processing for a plurality of image data acquired by the image capturing apparatus 1310. The photoelectric conversion system 1300 also includes a distance acquisition unit 1316 that calculates the distance up to a target object, and a collision determination unit 1318 that determines, based on the calculated distance, whether there is collision possibility. Here, the distance acquisition unit 1316 may acquire distance information up to a target object by using Time of Flight (ToF) method, or may acquire distance information by using parallax information or the like. That is, the distance information is information concerning a parallax, a defocus amount, a distance up to a target object, and the like. The collision determination unit 1318 may determine collision possibility using one of the pieces of distance information. The distance acquisition unit 1316 may be implemented by exclusively designed hardware, or may be implemented by a software module. The distance acquisition unit 1316 may be implemented by a Field Programmable Gate Array (FPGA), Application Specific Integrated Circuit (ASIC), or the like. Alternatively, the distance acquisition unit 1316 may be implemented by a combination of these.

The photoelectric conversion system 1300 is connected to a vehicle information acquisition apparatus 1320, and can acquire vehicle information such as a vehicle speed, a yaw rate, and a steering angle. The photoelectric conversion system 1300 is also connected to an ECU 1330 that is a control apparatus configured to output a control signal for generating a braking force to the vehicle based on the determination result of the collision determination unit 1318. Furthermore, the photoelectric conversion system 1300 is connected to an alarm apparatus 1340 that generates an alarm to the driver based on the determination result of the collision determination unit 1318. For example, if collision possibility is high as the determination result of the collision determination unit 1318, the ECU 1330 controls a driving apparatus (machine apparatus) 1360 to perform braking, releasing the accelerator pedal, or suppressing the engine output, thereby controlling the vehicle for avoiding collision and reducing damage. The alarm apparatus 1340 sounds an alarm, displays alarm information on the screen of a car navigation system or the like, or applies a vibration to the seat belt or a steering wheel, thereby making an alarm to the user.

In this application example, the periphery of the vehicle (moving body 1301), for example, the front or rear side is captured by the photoelectric conversion system 1300. Fig. 18B shows the photoelectric conversion system when capturing the front side (image capturing range 1350) of the vehicle. The vehicle information acquisition apparatus 1320 sends an instruction to the photoelectric conversion system 1300 or the image capturing apparatus 1310. With this configuration, it is possible to further improve the accuracy of distance measurement.

An example in which control is executed so as not to collide with another vehicle has been explained above. The photoelectric conversion system 1300 can also be applied to control of performing automated driving following another vehicle or control of performing automated driving without deviating from a lane. Furthermore, the photoelectric conversion system 1300 can be applied not only to a vehicle such as an automobile but also to, for example, a moving body (moving apparatus) such as a ship, an airplane, or an industrial robot. The moving body includes one or both of a driving force generation unit that generates a driving force mainly used for moving the moving body and a rotating body mainly used for moving the moving body. The driving force generation unit can be an engine, a motor, or the like. The rotating body can be a tire, a wheel, a ship screw, a propeller of a moving body, or the like. In addition, the photoelectric conversion system can be applied not only to a moving body but also to equipment that broadly uses object recognition, such as an intelligent transport system (ITS).

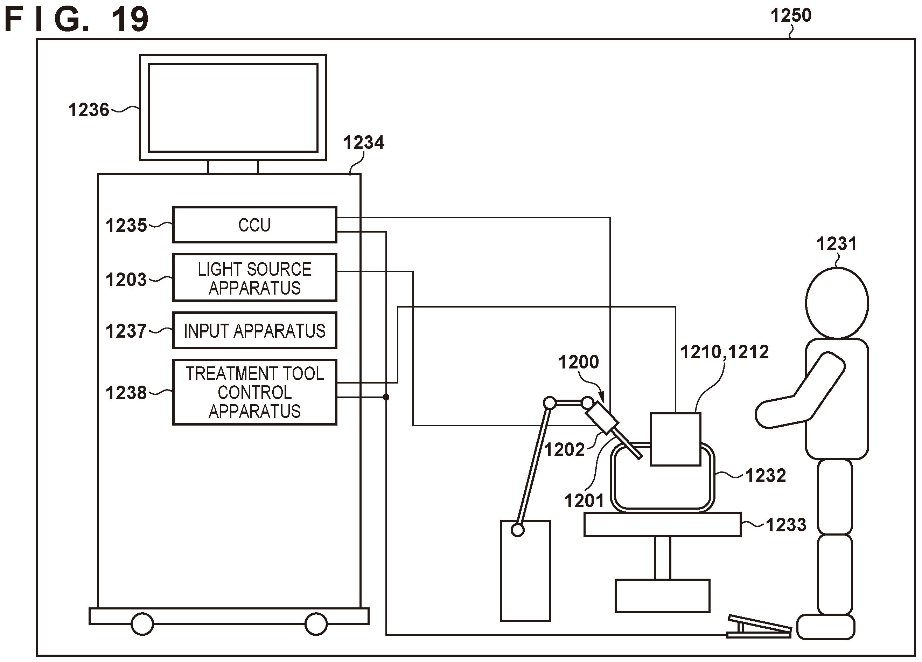

Fig. 19 is a view showing an example of the schematic arrangement of an endoscopic surgery system 1250 as the photoelectric conversion system according to fourth application example. Fig. 19 shows a state in which an operator (doctor) 1231 operates on a patient 1232 on a patient bed 1233 using the endoscopic surgery system 1250. As shown in Fig. 19, the endoscopic surgery system 1250 is formed from an endoscope 1200, a surgical tool 1210, and a cart 1234 on which various apparatuses for endoscopic surgery are mounted.

The endoscope 1200 includes a lens barrel 1201 including a region of a predetermined length from the distal end, which is inserted into the body cavity of the patient 1232, and a camera head 1202 connected to the proximal end of the lens barrel 1201. In the example shown in Fig. 19, the endoscope 1200 formed as a so-called hard mirror including the hard lens barrel 1201 is shown but the endoscope 1200 may be formed as a so-called soft mirror including a soft lens barrel.

An opening in which an objective lens is fitted is provided at the distal end of the lens barrel 1201. A light source apparatus 1203 is connected to the endoscope 1200, and light generated by the light source apparatus 1203 is guided to the distal end of the lens barrel 1201 by a light guide extended inside the lens barrel 1201, and is emitted to an observation target in the body cavity of the patient 1232 via the objective lens. Note that the endoscope 1200 may be a forward-viewing endoscope or may be a forward-oblique viewing endoscope or side-viewing endoscope.

An optical system and a photoelectric conversion apparatus are provided in the camera head 1202, and reflected light (observation light) from the observation target is condensed by the optical system onto the photoelectric conversion apparatus. The observation light is photoelectrically converted by the photoelectric conversion apparatus to generate an electrical signal corresponding to the observation light, that is, an image signal corresponding to an observation image. As the photoelectric conversion apparatus, the photoelectric conversion apparatus 100 described above can be used. The image signal is transmitted as RAW data to a Camera Control Unit (CCU) 1235.

The CCU 1235 is formed by a Central Processing Unit (CPU), a Graphics Processing Unit (GPU), and the like, and comprehensively controls the operations of the endoscope 1200 and a display apparatus 1236. Furthermore, the CCU 1235 receives an image signal from the camera head 1202, and performs, for the image signal, various kinds of image processes such as development processing (demosaic processing) for displaying an image based on the image signal.

Under the control of the CCU 1235, the display apparatus 1236 displays the image based on the image signal having undergone the image processing by the CCU 1235.

The light source apparatus 1203 is formed from a light source such as a Light Emitting Diode (LED), and supplies, to the endoscope 1200, irradiation light at the time of imaging an operation site or the like.

An input apparatus 1237 is an input interface to the endoscopic surgery system 1250. The user can input various kinds of information or instructions to the endoscopic surgery system 1250 via the input apparatus 1237.

A treatment tool control apparatus 1238 controls driving of an energy treatment tool 1212 for ablation or incision of the tissue, sealing of a blood vessel, or the like.

The light source apparatus 1203 that supplies, to the endoscope 1200, irradiation light at the time of imaging an operation site can be formed from, for example, a white light source formed by an LED, a laser light source, or a combination thereof. If the white light source is formed by a combination of RGB laser light sources, it is possible to accurately control the output intensity and output timing of each color (each wavelength), and thus the light source apparatus 1203 can adjust the white balance of a captured image. In this case, the observation target is time-divisionally irradiated with laser beams from the RGB laser light sources, respectively, and driving of the image sensor of the camera head 1202 is controlled in synchronism with the irradiation timings, thereby making it possible to time-divisionally capture images respectively corresponding to R, G, and B. In this method, it is possible to obtain a color image without providing color filters in the image sensor.

Driving of the light source apparatus 1203 may be controlled to change the intensity of light to be output for every predetermined time. It is possible to time-divisionally acquire images by controlling driving of the image sensor of the camera head 1202 in synchronism with the timing of changing the intensity of the light, and combine the images, thereby generating an image of a high dynamic range without so-called shadow detail loss or highlight detail loss.

The light source apparatus 1203 may be configured to supply light in a predetermined wavelength band corresponding to special light observation. In special light observation, for example, the wavelength dependency of light absorption in the body tissue is used. More specifically, by performing irradiation with light in a narrow band, as compared with irradiation light (that is, white light) at the time of normal observation, predetermined tissue such as a blood vessel in the mucous membrane surface layer is captured with high contrast. Alternatively, in special light observation, fluorescence observation for obtaining an image by using fluorescence generated by performing radiation with excitation light may be performed. In fluorescence observation, it is possible to, for example, irradiate body tissue with excitation light and observe fluorescence from the body tissue, or locally inject a reagent such as indocyanine green (ICG) to body tissue while irradiating the body tissue with excitation light corresponding to the fluorescence wavelength of the reagent, thereby obtaining a fluorescence image. The light source apparatus 1203 can be configured to supply narrow band light and/or excitation light corresponding to such special light observation.

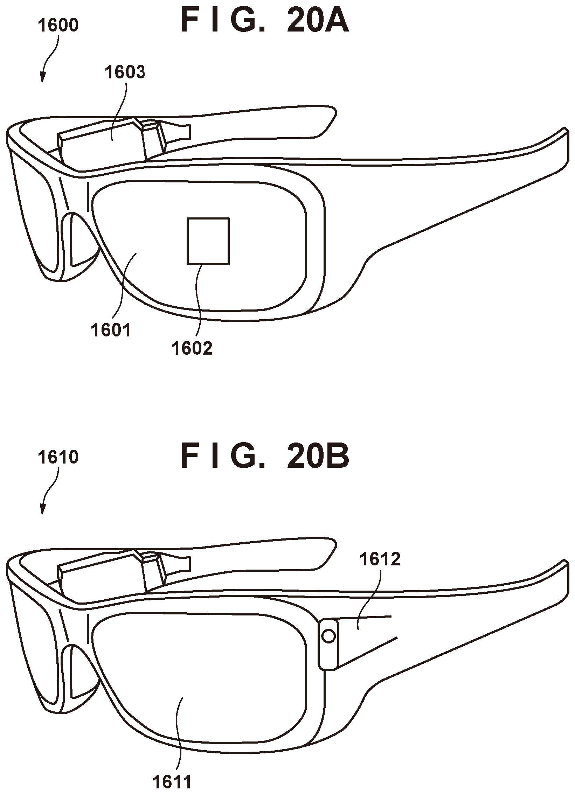

Fig. 20A describes glasses 1600 (smartglasses) as the photoelectric conversion system according to the fifth application example. The glasses 1600 include a photoelectric conversion apparatus 1602. The photoelectric conversion apparatus 1602 is the photoelectric conversion apparatus 100 described in each of the above embodiments. A display apparatus including the light emitting apparatus such as an OLED or LED may be provided on the back surface side of a lens 1601. One or a plurality of photoelectric conversion apparatuses 1602 may be provided. Alternatively, a plurality of kinds of photoelectric conversion apparatuses may be used in combination. The arrangement position of the photoelectric conversion apparatus 1602 is not limited to that shown in Fig. 20A.

The glasses 1600 further include a control apparatus 1603. The control apparatus 1603 functions as a power supply that supplies electric power to the photoelectric conversion apparatus 1602 and the above-described display apparatus. In addition, the control apparatus 1603 controls the operations of the photoelectric conversion apparatus 1602 and the display apparatus. An optical system configured to condense light onto the photoelectric conversion apparatus 1602 is formed on the lens 1601.

Fig. 20B describes glasses 1610 (smartglasses) according to an application example. The glasses 1610 include a control apparatus 1612, and a photoelectric conversion apparatus corresponding to the photoelectric conversion apparatus 1602 and a display apparatus are mounted on the control apparatus 1612. The photoelectric conversion apparatus in the control apparatus 1612 and an optical system configured to project light emitted from the display apparatus are formed in a lens 1611, and an image is projected to the lens 1611. The control apparatus 1612 functions as a power supply that supplies electric power to the photoelectric conversion apparatus and the display apparatus, and controls the operations of the photoelectric conversion apparatus and the display apparatus. The control apparatus may include a line-of-sight detection unit that detects the line of sight of a wearer. The detection of a line of sight may be done using infrared rays. An infrared ray emitting unit emits infrared rays to an eyeball of the user who is gazing at a displayed image. An image capturing unit including a light receiving element detects reflected light of the emitted infrared rays from the eyeball, thereby obtaining a captured image of the eyeball. A reduction unit for reducing light from the infrared ray emitting unit to the display unit in a plan view is provided, thereby reducing deterioration of image quality.

The line of sight of the user to the displayed image is detected from the captured image of the eyeball obtained by capturing the infrared rays. An arbitrary known method can be applied to the line-of-sight detection using the captured image of the eyeball. As an example, a line-of-sight detection method based on a Purkinje image obtained by reflection of irradiation light by a cornea can be used.

More specifically, line-of-sight detection processing based on pupil center corneal reflection is performed. Using pupil center corneal reflection, a line-of-sight vector representing the direction (rotation angle) of the eyeball is calculated based on the image of the pupil and the Purkinje image included in the captured image of the eyeball, thereby detecting the line-of-sight of the user.

The display apparatus according to this application example can include a photoelectric conversion apparatus including a light receiving element, and control a displayed image of the display apparatus based on the line-of-sight information of the user from the photoelectric conversion apparatus.

More specifically, the display apparatus decides a first visual field region at which the user is gazing and a second visual field region other than the first visual field region based on the line-of-sight information. The first visual field region and the second visual field region may be decided by the control apparatus of the display apparatus, or those decided by an external control apparatus may be received. In the display region of the display apparatus, the display resolution of the first visual field region may be controlled to be higher than the display resolution of the second visual field region. That is, the resolution of the second visual field region may be lower than that of the first visual field region.

In addition, the display region includes a first display region and a second display region different from the first display region, and a region of higher priority may be decided from the first display region and the second display region based on line-of-sight information. The first visual field region and the second visual field region may be decided by the control apparatus of the display apparatus, or those decided by an external control apparatus may be received. The resolution of the region of higher priority may be controlled to be higher than the resolution of the region other than the region of higher priority. That is, the resolution of the region of relatively low priority may be low.

Note that Al may be used to decide the first visual field region or the region of higher priority. The Al may be a model configured to estimate the angle of the line of sight and the distance to a target object ahead the line of sight from the image of the eyeball using the image of the eyeball and the direction of actual viewing of the eyeball in the image as supervised data. The Al program may be held by the display apparatus, the photoelectric conversion apparatus, or an external apparatus. If the external apparatus holds the Al program, it is transmitted to the display apparatus via communication.

When performing display control based on line-of-sight detection, application to smartglasses further including a photoelectric conversion apparatus configured to capture the image of the outside is possible. The smartglasses can display the captured outside image information in real time.

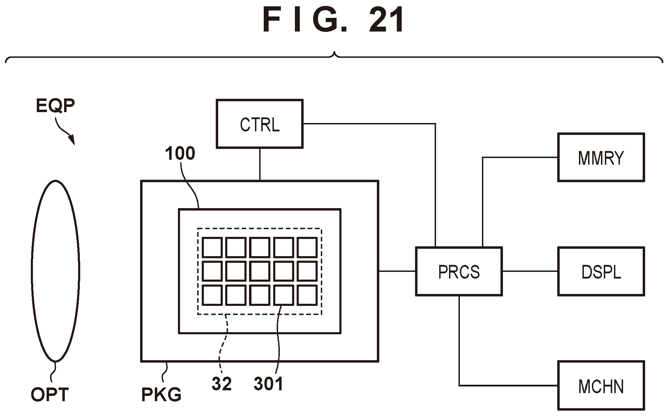

Fig. 21 is a schematic view of equipment EQP including the photoelectric conversion apparatus 100. As shown in Fig. 21, the photoelectric conversion apparatus 100 is stored in a semiconductor package PKG. The package PKG can include a base to which the photoelectric conversion apparatus 100 is fixed, a lid member of glass or the like facing the photoelectric conversion apparatus 100, and a conductive connecting member such as bonding wire or bump, which connects a terminal provided on the base and a terminal provided in the photoelectric conversion apparatus 100. The equipment EQP may further include at least one of a control device CTRL, a processing device PRCS, a display device DSPL, and a memory device MMRY.

An optical system OPT forms an image on the pixel region 32 where the plurality of pixels 301 are arranged, and can be, for example, a lens, a shutter, a mirror, or the like. The control device CTRL controls the operation of the photoelectric conversion apparatus 100 and can be, for example, a semiconductor device such as an ASIC. The processing device PRCS processes a signal output from the photoelectric conversion apparatus 100 and can be a semiconductor device such as a CPU or an ASIC. The display device DSPL can be an EL display device or a liquid crystal display device that displays data obtained by the photoelectric conversion apparatus 100. The memory device MMRY can be a magnetic device or a semiconductor device that stores data obtained by the photoelectric conversion apparatus 100. The memory device MMRY can be a volatile memory such as an SRAM or a DRAM, or may be a nonvolatile memory such as a flash memory or a hard disk drive. A machine device MCHN can include a movable portion or a propulsion unit such as a motor or an engine. The machine device MCHN, for example, drives a component of the optical system OPT for a zooming, focusing, or shutter operation. In the equipment EQP, data output from the photoelectric conversion apparatus 100 is displayed on the display device DSPL or transmitted to the outside by a communication device (not shown) provided in the equipment EQP. For this purpose, the equipment EQP may include the memory device MMRY or the processing device PRCS.

The equipment EQP incorporating the photoelectric conversion apparatus 100 can also be applied to a surveillance camera, or an in-vehicle camera mounted in transport equipment such as an automobile, a railway vehicle, a ship, an aircraft, or an industrial robot. In addition, the equipment EQP incorporating the photoelectric conversion apparatus 100 can be applied not only to transport equipment but also widely to equipment that uses object recognition such as an intelligent transport system (ITS).

### Other Embodiments

Embodiment(s) of the disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

According to the disclosure, a technique advantageous for improving the quality of an image can be provided.

Various embodiments have been described in detail above but it will be understood that the present disclosure is not limited to these embodiments and encompasses all modifications, variants, alternatives and equivalents falling within the scope of the appended claims.

## Claims

1. An apparatus (100) that includes a converter (102) where a plurality of pixels (301) are arranged, and a processor (103) configured to process image data read out from the converter (102), **characterized in that**
the converter (102) is configured to enable readout of image data during an exposure period for obtaining one frame image, and
the processor (103)
includes a model (104) configured to estimate, from input data based on first image data read out during the exposure period, frame image data read out from the converter (102) after the exposure period is completed, and
causes the model (104) to perform learning based on a comparison result between estimated image data, which is estimated from the input data by the model (104), and the frame image data.

2. The apparatus according to claim 1, **characterized in that**
each of the plurality of pixels includes a photodiode and a counter circuit configured to count an output of the photodiode,
the first image data is generated based on count values read out from the counter circuits of the plurality of pixels during the exposure period, and
the frame image data is generated based on count values read out from the counter circuits of the plurality of pixels after the exposure period is completed.

3. The apparatus according to claim 1 or 2, **characterized in that**
the processor causes the model to perform learning until a difference between the estimated image data and the frame image data becomes not more than a threshold.

4. The apparatus according to any one of claims 1 to 3, **characterized in that**
the processor inputs the frame image data to the model which has been learned, and performs an image process of the frame image data.

5. The apparatus according to any one of claims 1 to 4, **characterized in that**
the model generates the estimated image data by performing tone interpolation on the input data.

6. The apparatus according to claim 5, **characterized in that**
the model generates the estimated image data by further performing dynamic range expansion processing of dark level data in the input data.

7. The apparatus according to any one of claims 1 to 6, **characterized in that**
the processor further includes a preprocessor configured to generate the input data from the first image data, and
the preprocessor generates the input data by removing some tone data from the first image data.

8. The apparatus according to any one of claims 1 to 7, **characterized in that**
the processor further includes a preprocessor configured to generate the input data from the first image data, and
the preprocessor generates the input data by removing some pixel data from data output from the plurality of pixels and included in the first image data.

9. The apparatus according to any one of claims 1 to 8, **characterized in that**
the processor further includes a preprocessor configured to generate the input data from the first image data, and
the preprocessor generates the input data by removing a high frequency component from the first image data.

10. The apparatus according to any one of claims 7 to 9, **characterized in that**
the preprocessor performs, on the first image data, gain correction according to a length of the exposure period and a length of a period from a start of the exposure period to a readout timing of the first image data.

11. The apparatus according to any one of claims 1 to 10, **characterized in that**
the model generates the estimated image data by performing halftone processing on the input data.

12. The apparatus according to claim 11, **characterized in that**
the processor further includes a preprocessor configured to generate the input data by performing, on the first image data, gain correction according to a length of the exposure period and a length of a period from a start of the exposure period to a readout timing of the first image data.

13. A system **characterized by** comprising:
the apparatus according to any one of claims 1 to 12; and
a processing circuit configured to generate an image using a signal output from the apparatus.

14. A moving body that includes the apparatus according to any one of claims 1 to 12, **characterized by** comprising
a control apparatus configured to control movement of the moving body by using a signal output from the apparatus.

15. Equipment **characterized by** comprising:
the apparatus according to any one of claims 1 to 12; and
a processing apparatus configured to process a signal output from the apparatus.

16. A learning method of a model (104) that receives input data based on first image data read out from a converter (102) during an exposure period for obtaining one frame image, and estimates frame image data read out from the converter (102) after the exposure period is completed, **characterized by** comprising
comparing estimated image data, which is estimated from the input data by the model (104), with the frame image data,
wherein the model (104) performs learning based on a result of the comparing.

17. A method **characterized in that**
a process is performed by inputting the frame image data to the model having undergone learning using the learning method according to claim 16.

18. A program for causing a computer to execute a learning method of a model (104) that receives input data based on first image data read out from a converter (102) during an exposure period for obtaining one frame image, and estimates frame image data read out from the converter (102) after the exposure period is completed, **characterized by** comprising
comparing estimated image data, which is estimated from the input data by the model (104), with the frame image data,
wherein the model (104) performs learning based on a result of the comparing.
